# EUROPÄISCHE PATENTANMELDUNG

(11) **EP 4 841 247 A1**
(43) Veröffentlichungstag der Anmeldung: **18.11.2026**
(21) Anmeldenummer: 26177853.4
(22) Anmeldetag: 11.05.2026
(51) Int. Cl.: G01N 21/64, G02B 21/00, G02B 21/36, G02B 27/09

(54) **VORRICHTUNG UND VERFAHREN ZUR ZWEIPHOTONENMIKROSKOPIE**

(30) Priorität: 14.05.2025 DE 102025118546
(71) Anmelder: Technische Universität München, in Vertretung des Freistaates Bayern, 80333 München (DE)
(72) Erfinder: Richter, Jonathan, 81739 München (DE); Chen, Yang, 81673 München (DE); Konnerth, Arthur, 80805 München (DE)
(74) Vertreter: K & H Bonapat Patentanwälte Koch · von Behren & Partner mbB

(57) **Zusammenfassung**

Die Erfindung betrifft eine Vorrichtung (30) für die Zweiphotonenmikroskopie zur Gewinnung von Informationen aus einer biologischem Gewebeprobe (GP), mit einer Lasereinheit (LE) zur Erzeugung eines Anregungsstrahls (AS), einer zwischen der Lasereinheit (LE) und der Gewebeprobe (GP) angeordneten Optikeinheit (31, 32 - 39) mit einem Objektivelement (OE), das einen Strahlengang (SG) der Optikeinheit (31, 32 - 39) zur Anregung der Gewebeprobe (GP) in einer Anregungsrichtung (Z) des Anregungsstrahls (AS) zur Gewebeprobe (GP) hin als letztes optisches Element abschließt und ausgebildet ist, den Anregungsstrahl (AS) zur Erzeugung eines optischen Signals an unterschiedlichen Orten in oder an der Gewebeprobe (GP) in einer Ebene (X, Y) senkrecht zu der Anregungsrichtung (Z) zu fokussieren, und einer Detektoreinheit (DE) zur Erfassung des von dem Objektivelement (OE) aufgenommenen optischen Signals von der Gewebeprobe (GP), wobei ein von der Optikeinheit (31, 32 - 39) umfasstes multifokales diffraktives optisches Element (DOE) in den Strahlengang (SG) der Optikeinheit (31, 32 - 39) in der Anregungsrichtung (Z) des Anregungsstrahls (AS) zur Gewebeprobe (GP) hin als vorletztes optisches Element benachbart zu dem Objektivelement (OE) angeordnet und ausgebildet ist, den Anregungsstrahl (AS) nach Durchlaufen des Objektivelements (OE) in Ausgangsstrahlen (20, 21, 22) zu unterteilen, die jeweils einen Fokuspunkt (F20, F21, F22) in der Anregungsrichtung (Z) auf und/oder beabstandet von einer optischen Achse (OA) des Strahlengangs (SG) der Optikeinheit (31, 32 - 39) bilden, wobei jeder Fokuspunkt (F20, F21, F22) der von den Ausgangsstrahlen (20, 21, 22) jeweils gebildeten Fokuspunkte (F20, F21, F22) durch Beugung einer vollständigen Wellenfront des Anregungsstrahls (AS) gebildet ist.

Ferner betrifft die Erfindung ein Verfahren zur Zweiphotonenmikroskopie zur Gewinnung von Informationen aus einer biologischem Gewebeprobe (GP).

## Beschreibung

Die Offenbarung betrifft eine Vorrichtung für die Zweiphotonenmikroskopie zur Gewinnung von Informationen aus einer biologischem Gewebeprobe. Ferner betrifft die Erfindung ein Verfahren für die Zweiphotonenmikroskopie zur Gewinnung von Informationen aus einer biologischem Gewebeprobe.

Die vorliegende Erfindung betrifft das technische Gebiet der Zweiphotonen Mikroskopie (auch 2-Photonen Mikroskopie oder kurz 2PM genannt). 2PM ist ein spezielles mikroskopisches Verfahren, was vor allem für *in vivo* Messungen geeignet ist, also Messungen am lebenden Organismus. Solche Messungen werden beispielsweise an Mäusen über ein so genanntes "cranial window" durchgeführt, eine im Schädel implantierte Glasscheibe. Anschließend beobachtet man Zellen, die entweder mit einem genetisch kodierten Farbstoff oder einem anderen Farbstoff angefärbt wurden, während die Maus unter dem Mikroskop fixiert ist. Ein Laser tastet dann eine Bildebene Punkt für Punkt ab, um so ein Bild zu generieren.

Der Vorteil von 2PM liegt darin, dass wegen der zugrundeliegenden Zwei-Photonen-Anregung nur Fluoreszenzfarbstoffmoleküle in der Bildebene angeregt werden. Dadurch, und durch die Verwendung von Anregungslicht im Nahinfrarotspektrum ist es möglich, *in vivo* zu messen. Aufgrund dieser Art der Anregung haben Zwei-Photonen-Mikroskope jedoch inhärent eine sehr geringe Schärfentiefe.

Manchmal ist es aber von Vorteil, ein großes Volumen auszuleuchten. Das ist z. B. dann der Fall, wenn man Signale in Neuronen messen möchte, die an verschiedenen Stellen der Zelle zustande kommen und daher in verschiedenen Ebenen in der Tiefe der Probe liegen. Statt also einen Punkt in einer Bildebene anzuregen, möchte man mehrere Punkte in mehreren Ebenen anregen, oder aber einen in die Tiefe verlängerten Fokuspunkt erzeugen. So kann man in Echtzeit, also bei Bildfrequenzen ca. 200 Hz oder höher) biologische Prozesse wie eine Reizübermittlung im Nervensystem beobachten.

Die Aufgabe der vorliegenden Erfindung besteht in der Bereitstellung einer Vorrichtung und eines Verfahrens für die Zweiphotonenmikroskopie, mit der und mit dem es auf einfache Weise möglich ist, volumetrische Echtzeitaufnahmen durchzuführen. Eine weitere Aufgabe besteht darin, vorhandene Zweiphotonenmikroskope auf einfache und/oder kostengünstige Weise zu ertüchtigen, um volumetrische Echtzeitaufnahmen auf einfache Weise durchführen zu können.

Diese Aufgabe wird durch die Gegenstände der unabhängigen Ansprüche gelöst. Vorteilhafte Ausgestaltungen der Erfindung sind in den Unteransprüchen angegeben.

Die Erfindung betrifft eine Vorrichtung für die Zweiphotonenmikroskopie zur Gewinnung von Informationen aus einer biologischem Gewebeprobe, mit einer Lasereinheit zur Erzeugung eines Anregungsstrahls, einer zwischen der Lasereinheit und der Gewebeprobe angeordneten Optikeinheit mit einem Objektivelement, das einen Strahlengang der Optikeinheit zur Anregung der Gewebeprobe in einer Anregungsrichtung des Anregungsstrahls zur Gewebeprobe hin als letztes optisches Element abschließt und ausgebildet ist, den Anregungsstrahl zur Erzeugung eines optischen Signals an unterschiedlichen Orten in oder an der Gewebeprobe in einer Ebene senkrecht zu der Anregungsrichtung zu fokussieren, und einer Detektoreinheit zur Erfassung des von dem Objektivelement aufgenommenen optischen Signals von der Gewebeprobe. Ein von der Optikeinheit umfasstes multifokales diffraktives optisches Element (DOE) ist in den Strahlengang der Optikeinheit in der Anregungsrichtung des Anregungsstrahls zur Gewebeprobe hin als vorletztes optisches Element benachbart zu dem Objektivelement angeordnet und ausgebildet, den Anregungsstrahl nach Durchlaufen des Objektivelements in Ausgangsstrahlen zu unterteilen, die jeweils einen Fokuspunkt in der Anregungsrichtung auf und/oder beabstandet von einer optischen Achse des Strahlengangs der Optikeinheit bilden, wobei jeder Fokuspunkt der von den Ausgangsstrahlen jeweils gebildeten Fokuspunkte durch Beugung einer vollständigen Wellenfront des Anregungsstrahls gebildet ist.

Als Lichtquelle kommt insbesondere ein kohärente Laserquelle im nahen Infrarotbereich in Betracht. Die Anregungsrichtung kann in kartesischen Koordinaten als Z-Richtung definiert sein. Die Ebene senkrecht zu der Anregungsrichtung kann in kartesischen Koordinaten als X/Y-Ebene definiert sein. Die Gewebeprobe kann Zellen, die entweder mit einem genetisch kodierten Farbstoff oder einem anderen Farbstoff angefärbt wurden, eines Gehirns einer Maus oder eines anderen Tieres umfassen. Während der Messung kann die Maus oder das andere Tier unter dem Mikroskop fixiert sein. Die Gewebeprobe kann auch Zellkerne, Synapsen oder Dendriten, also Zellfortsätze von Nervenzellen, die aus dem Zellkörper hervorgehen und vorwiegend der Reizaufnahme dienen, oder andere Bestandteile von Zellen als Messobjekte allein oder zusammen umfassen.

Das diffraktive optische Element wird auch kurz DOE genannt. Es ist in der Lage, den Anregungsstrahl in Anregungsrichtung in Ausgangsstrahlen zu unterteilen, die jeweils einen Fokuspunkt in der Anregungsrichtung bilden, wobei jeder Fokuspunkt der von den Ausgangsstrahlen jeweils gebildeten Fokuspunkte durch Beugung einer vollständigen Wellenfront des Anregungsstrahls gebildet ist. Das DOE ist in den Strahlengang der Optikeinheit in der Anregungsrichtung des Anregungsstrahls zur Gewebeprobe hin als vorletztes optisches Element benachbart zu dem Objektivelement als letztem optischen Element der Optikeinheit angeordnet und ausgebildet, den Anregungsstrahl nach Durchlaufen des Objektivelements in Ausgangsstrahlen zu unterteilen, die jeweils einen Fokuspunkt in der Anregungsrichtung auf und/oder beabstandet von einer optischen Achse des Strahlengangs der Optikeinheit bilden. Es wird also vorgeschlagen, das multifokale DOE unmittelbar vor dem Objektiv in den Strahlengang der Optikeinheit des Zweiphotonenmikroskops anzuordnen. Mit dieser Anordnung können mithilfe des optischen Elements in Form eines DOE mehrere Fokuspunkte in Z-Richtung in der Tiefe der Gewebeprobe erzeugt werden. Das DOE ist so konzipiert, dass es den einfallenden Laserstrahl in mehrere Ausgangsstrahlen, auch Beamlets genannt, unterteilt, die nach Brechung am Objektiv statt einem Fokuspunkt mehrere Foki auf der optischen Achse oder neben der optischen Achse in unterschiedlichen Tiefen der Gewebeprobe bilden. Dadurch ist es der Detektoreinheit, beispielsweise ein Photomultiplier, auch Photoelektronenvervielfacher oder kurz PMT genannt, möglich, Bilder mit sehr hoher Schärfentiefe aufzunehmen. Man kann auf diese Weise Bilder beispielsweise von Dendriten und/oder Synapsen aufzunehmen, die in mehreren Ebenen in Z-Richtung liegen und zugleich hohe Bildraten, auch Framerates genannt, nutzen, z. B. für Echtzeitaufnahmen.

Das DOE kann beispielsweise so ausgebildet sein, dass zwei weit entfernte Ebenen in der Gewebeprobe, z. B. ca. 100 µm voneinander beabstandet, aufgenommen werden können (als Projektion) oder um durch Ausleuchtung eines Volumens der Gewebeprobe mithilfe mehrerer Fokuspunkte über eine Tiefe von ca. 50 µm eine gewisse Resistenz gegen Bewegungsartefakte zu erzeugen. Durch das DOE werden nach Durchlaufen des Objektelementes mehrere separate Fokuspunkte in der Anregungsrichtung in der Gewebeprobe erzeugt. Tastet/Scannt nun das Laserelement die Bildebene Punkt für Punkt ab, entstehen statt bisher einer Bildebene in Z-Richtung mehrere Bildebenen in mehreren Tiefen in Z-Richtung. Diese können dann von der Detektoreinheit, z. B. einem PMT gemessen werden und ergeben eine Art Z-Projektion, die das aufgenommene Bild zeigt. Während in der herkömmlichen 2PM die Tiefenschärfe begrenzt ist und man deswegen nur einen kleinen Teil z. B. von Dendriten sehen konnte, kann mit der erfindungsgemäßen Vorrichtung bei der Mehrebenen-Anregung in der Tiefe der Gewebeprobe via DOE ein deutlich größerer Ausschnitt der Probe in Z-Richtung gesehen und aufgenommen werden.

Vorteile der 2PM-Vorrichtung mit dem DOE als vorletztem optischen Element benachbart angeordnet zu dem Objektivelement als letztem optischen Element der Optikeinheit zur Anregung der Gewebeprobe sind:
1. Einfache Implementierung des DOE und daher geringe Komplexität des 2PM mit dem implementierten DOE,
2. Gleichmäßige Ausleuchtung aller Fokusebenen in der Tiefe der Probe oder gezielt andere Intensitätsverteilung zwischen den verschiedenen Fokusebenen in Z-Richtung,
3. Nahezu beliebiger Abstand der Fokusebenen bei einstellbarer Intensität je Fokusebene mit entsprechend konfiguriertem DOE,
4. Hohe Effizienz der einfallenden Laserstrahlung (ca. 80% der auf das DOE fallenden Laserstrahlung oder mehr werden in Fokuspunkte umgewandelt),
5. Geringer Preis des DOE (ca. 1000 - 2000 USD),
6. Nachrüstbarkeit von nahezu jedem konventionellen Zwei-Photonen-Mikroskop, und
7. Mögliche Verwendung mehrerer Wellenlängen, z.B. für Mehrfarben-Bildgebung, mit dem gleichen DOE.

Das DOE kann vorteilhafterweise als ein einziges optisches Element ausgeführt sein, das in aus mehreren Elementen integrierter Form oder in monolithischer Form vorliegt. Auf diese Weise können mit einem einzigen DOE das 2PM Fokuspunkte in mehreren Tiefenebenen der Gewebeprobe für eine Volumenaufnahme mit hoher Tiefenschärfe zur Verfügung gestellt werden.

Mit Vorteil kann das DOE zur Steuerung von Intensitäten der Fokuspunkte und Abständen zwischen den Fokuspunkten mittels eines gewichteten Gerchberg-Saxton-Algorithmus, eines gradient-descent-Verfahrens oder einer analytischen Methode berechnet sein, um ein Computer generiertes Hologramm zu erzeugen, das eine Abbildung entsprechend einer multifokalen Linse liefert. Auf diese Weise kann das DOE Fokuspunkte mit variabel einstellbarer Intensität und mit variabel einstellbarem Abstand der Fokuspunkte voneinander mit hoher vorab berechneter Genauigkeit aufweisen.

Wenn das DOE so ausgeführt ist, dass sämtliche Fokuspunkte in der Anregungsrichtung voneinander im Wesentlichen gleichbeabstandet sind und im Wesentlichen gleiche Intensitäten zueinander aufweisen, kann die Gewebeprobe homogen mit in Anregungsrichtung wenig oder fast nicht abfallender Intensität ausgeleuchtet werden. Wenn sämtliche Fokuspunkte in der Anregungsrichtung voneinander im Wesentlichen gleichbeabstandet sind und voneinander unterschiedliche Intensitäten aufweisen, die in Anregungsrichtung zunehmen, kann eine zunehmende Schwächung der Intensitäten der Fokuspunkte in Anregungsrichtung durch eine Streuung in der Gewebeprobe ausgeglichen werden. Es kann auch vorteilhaft sein, dass man z. B. eine tiefere Ebene besonders schwach ausleuchtet, wenn die beobachtete Struktur dort deutlich heller ist. Beispielsweise kann es vorkommen, dass oberflächliche Dendriten relativ für eine gute Signalqualität hell, also mit hoher Intensität, zu beleuchten sind, während ein tiefer gelegener Zellkörper nicht so stark ausgeleuchtet sein muss, da er im Verhältnis zu den Dendriten groß ist und starke Lichtsignale in das Objektiv und das Detektorelement zurücksendet.

Das DOE kann vorteilhafterweise so ausgeführt sein, dass zusätzlich zu den in der Anregungsrichtung voneinander im Wesentlichen gleichbeabstandeten Fokuspunkten zumindest ein weiterer Fokuspunkt in Anregungsrichtung um ein Mehrfaches des Abstandes der gleichbeabstandeten Fokuspunkte voneinander beabstandet von den gleichbeabstandeten Fokuspunkten gebildet ist, wobei eine Intensität des weiteren Fokuspunktes unabhängig von einer Intensität des zu dem weiteren Fokuspunkt in entgegengesetzter Anregungsrichtung benachbarten Fokuspunktes festlegbar oder festgelegt ist. Auf diese Weise kann eine Messung spezifisch auf die Messbedingungen in der Gewebeprobe angepasst sein. Es kann beispielsweise interessant sein, nur zwei verschiedene Bereiche einer Probe in der Tiefe auszuleuchten. Zum Beispiel das Soma und den Tuft einer Nervenzelle. Die anwendungsspezifische Ausführung des diffraktiven optischen Elementes gemäß obiger Ausführungsform erlaubt diese Ausleuchtung der Probe in nur zwei verschiedenen Bereichen der Probe in der Tiefe.

Das DOE kann mit Vorteil entweder gegenüber der optischen Achse so ausgerichtet sein, insbesondere zu der optischen Achse zentriert sein, dass sämtliche Fokuspunkte auf der optischen Achse liegen, oder gegenüber der optischen Achse so ausgerichtet sein, insbesondere aus einer zu der optischen Achse zentralen Lage heraus verschoben sein, dass jeder der Fokuspunkte, der in Anregungsrichtung jeweils zu einem anderen der Fokuspunkte benachbart ist, einen positiven Abstand zu dem anderen Fokuspunkt in eine gleiche Richtung senkrecht zu der Anregungsrichtung aufweist. In erster Alternative liegen die Fokuspunkte auf der optischen Achse des Strahlengangs der Optikeinheit, so dass mit einer beugungsbegrenzten Auflösung der Fokuspunkte in einer Ebene senkrecht zur optischen Achse eine homogene Ausleuchtung eines Volumens der Probe in Anregungsrichtung erhalten wird. Die zweite Alternative kann dazu benutzt werden, durch Verschieben des DOE zu der optischen Achse ein Verschieben der Fokuspunkte zueinander zu erreichen. Dies kann man dazu benutzen, über sequenzielles Aufnehmen zweier Bilder/Frames mit in unterschiedlicher Richtung in einer Ebene senkrecht zu der optischen Achse jeweils verschobenen Fokusebenen ein anaglyphisches 3D-Bild zu erzeugen, das ermöglicht, die Tiefe einzelner Objekte zu bestimmen oder zumindest abzuschätzen.

Das DOE kann auch , wie oben bei den Vorteilen bereits angesprochen, vorteilhafterweise ausgebildet sein, mit unterschiedlichen Wellenlängen des Anregungsstrahls derart verwendet zu werden, dass die von den unterschiedlichen Wellenlängen gebildeten Fokuspunkte jeweils in der Anregungsrichtung und in einer Ebene senkrecht zu der Anregungsrichtung zusammenfallen, insbesondere, um Intensitäten verschiedener Farbstoffe an oder in der Gewebeprobe gleichzeitig messen zu können, z. B. Glutamat und Calcium Indikatoren. Die Verwendung eines multifokalen DOE, das auf mehrere Anregungswellenlängen optimiert ist, erlaubt daher die Analyse komplexer Prozesse.

Vorteilhafterweise wird vorgeschlagen, in den Strahlengang der Optikeinheit entweder ein Piezoobjektiv als Objektivelement der Optikeinheit anzuordnen, oder einen Strahlteiler als weiteres optisches Element der Optikeinheit derart anzuordnen, dass der am Strahlteiler eintreffende Anregungsstrahl in erste und zweite Strahlen geteilt wird, wovon der erste Strahl unmittelbar vom Strahlteiler reflektiert wird und der zweite Strahl refokussiert und gegenüber dem ersten Strahl zeitverzögert den Strahlteiler zur Vereinigung mit dem ersten Strahl durchläuft, um jeweils die zwischen den Fokuspunkten auftretenden Abstände in Anregungsrichtung mit den Fokuspunkten entsprechenden Intensitäten auszuleuchten. In der ersten Alternative kann trotz Einsatzes eines Piezoobjektives bei kontinuierlich ausgeleuchteter Tiefe der Gewebeprobe mit hohen Bildraten, beispielsweise in Echtzeit, gemessen werden, da nur die nicht ausgeleuchteten Bereiche benachbarter Fokuspunkte von dem Piezoobjektiv auszuleuchten sind. In der zweiten Alternative wird, um mechanische Elemente wie das Piezoobjektiv, zu vermeiden, eine rein optische Lösung vorgeschlagen, die eine Verzögerung des Lichtstrahles und eine Veränderung der Kollimation nutzt, um denselben Effekt zu erzielen wie das Piezoobjektiv. Der in der X/Y-Ebene scannende Anregungsstrahl wird mittels des Strahlteilers, auch Beamsplitter genannt, in zwei Strahlen aufgeteilt und die beiden Strahlen werden anschließend wieder kombiniert, wobei der zweite Strahl zu dem ersten Strahl zeitverzögert wird, um zu vermeiden, dass die Fokuspunkte interferieren, und refokussiert wird, sodass die aus dem zweiten Strahl resultierenden Fokusebenen zwischen denen des nicht von der Verzögerung und Fokussierung betroffenen ersten Strahles liegen. Das Trennen in zwei Strahlen und Vereinigen des zweiten Strahls mit dem ersten Strahl kann mittels einer um die optische Achse drehbaren Lambda/2-Platte, die von dem Anregungsstrahl vor Eintritt in den Strahlteiler durchlaufen wird, zur Einstellung der Intensitäten von X- und Y-Polarisationskomponenten der ersten und zweiten Strahlen zueinander und dem Strahlenteiler, der polarisationsabhängig ausgeführt ist, erreicht werden. Auf diese Weise wird eine homogene Ausleuchtung zwischen den Fokuspunkten ohne zusätzliche mechanische Elemente erreicht, was zu einer hohen Bildrate bei günstigen Kosten führt.

Von der Erfindung umfasst ist auch ein Verfahren zur Zweiphotonenmikroskopie zur Gewinnung von Informationen aus einer biologischem Gewebeprobe, umfassend die Schritte:
- Erzeugen eines Anregungsstrahls durch einer Lasereinheit,
- Anordnen einer zwischen der Lasereinheit und der Gewebeprobe angeordneten Optikeinheit mit einem Objektivelement, das einen Strahlengang der Optikeinheit zur Anregung der Gewebeprobe in einer Anregungsrichtung des Anregungsstrahls zur Gewebeprobe hin als letztes optisches Element abschließt und den Anregungsstrahl zur Erzeugung eines optischen Signals an unterschiedlichen Orten in oder an der Gewebeprobe in einer Ebene senkrecht zu der Anregungsrichtung fokussiert, und
- Erfassen des von dem Objektivelement aufgenommenen optischen Signals von der Gewebeprobe durch eine Detektoreinheit,
wobei ein von der Optikeinheit umfasstes multifokales diffraktives optisches Element in den Strahlengang der Optikeinheit in der Anregungsrichtung des Anregungsstrahls zur Gewebeprobe hin als vorletztes optisches Element benachbart zu dem Objektivelement angeordnet und so ausgebildet wird, dass der Anregungsstrahl nach Durchlaufen des Objektivelements in Ausgangsstrahlen unterteilt wird, die jeweils einen Fokuspunkt in der Anregungsrichtung auf und/oder beabstandet von einer optischen Achse des Strahlengangs der Optikeinheit bilden, wobei jeder Fokuspunkt der von den Ausgangsstrahlen jeweils gebildeten Fokuspunkte durch Beugung einer vollständigen Wellenfront des Anregungsstrahls gebildet wird.

Das Verfahren zur Zweiphotonenmikroskopie weist die gleichen Vorteile und Effekte auf, wie sie im Zusammenhang mit der oben beschriebenen Vorrichtung zur Zweiphotonenmikroskopie erwähnt sind. Die Vorrichtung zur Zweiphotonenmikroskopie ist zur Durchführung des Verfahren zur Zweiphotonenmikroskopie geeignet.

In einer vorteilhaften Ausführungsform ist vorgesehen, dass
- das DOE aus einer zu der optischen Achse zentralen Lage heraus in eine erste Richtung in einer Ebene senkrecht zur Anregungsrichtung so verschoben wird, dass jeder der Fokuspunkte, der in Anregungsrichtung jeweils zu einem anderen der Fokuspunkte benachbart ist, einen positiven Abstand zu dem anderen Fokuspunkt in eine gleiche Richtung senkrecht zu der Anregungsrichtung aufweist,
- ein erstes Bild der Gewebeprobe von der Detektoreinheit aufgenommen wird, bei dem das DOE aus der zu der optischen Achse zentralen Lage heraus in die erste Richtung in einer Ebene senkrecht zur Anregungsrichtung verschoben ist,
- das DOE aus einer zu der optischen Achse zentralen Lage heraus in eine zu der ersten Richtung entgegengesetzte zweite Richtung in einer Ebene senkrecht zur Anregungsrichtung verschoben wird,
- ein zweites Bild der Gewebeprobe von der Detektoreinheit aufgenommen wird, bei dem das DOE aus der zu der optischen Achse zentralen Lage heraus in die zu der ersten Richtung entgegengesetzte zweite Richtung in einer Ebene senkrecht zur Anregungsrichtung verschoben ist,
- die ersten und zweiten Bilder der Gewebeprobe zu einem anaglyphischen 3D-Bild überlagert werden, um eine Tiefe einzelner Objekte der Gewebeprobe in der Gewebeprobe zu bestimmen oder zumindest abzuschätzen.

Statt das DOE aus der zu der optischen Achse zentralen Lage heraus in eine erste Richtung in einer Ebene senkrecht zur Anregungsrichtung zu verschieben und anschließend das DOE aus der zu der optischen Achse zentralen Lage heraus in eine zu der ersten Richtung entgegengesetzte zweite Richtung in einer Ebene senkrecht zur Anregungsrichtung zu verschieben, um die Schräglage der Fokuspunkte zu erzeugen, kann das DOE bereits mit der Schräglage der Fokuspunkte erzeugt werden. In diesem Fall kann ein derart gebildetes DOE in seiner zentralen Lage zur optischen Achse um die optische Achse gedreht werden, um Schräglagen in zueinander entgegengesetzten Richtungen in einer Ebene senkrecht zur Anregungsrichtung zu erzeugen, wie dies bei der Ausführungsform mit den zu der optischen Achse verschobenen DOE gegeben ist.

Das beschriebene Verfahren mit dem verschobenen oder gedrehten DOE kann, wie bereits oben erwähnt, dazu benutzt werden, über sequenzielles Aufnehmen zweier Bilder/Frames mit in unterschiedlicher Richtung in einer Ebene senkrecht zu der optischen Achse jeweils verschobenen Fokusebenen ein anaglyphisches 3D-Bild zu erzeugen, das ermöglicht, die Tiefe einzelner Objekte zu bestimmen oder zumindest abzuschätzen.

Ausführungsbeispiele der Erfindung sind in den Figuren dargestellt und werden im Folgenden näher beschrieben. Im Folgenden werden, sofern nicht anders angegeben, für gleiche und gleichwirkende Elemente gleiche Bezugszeichen verwendet.

Es zeigen:

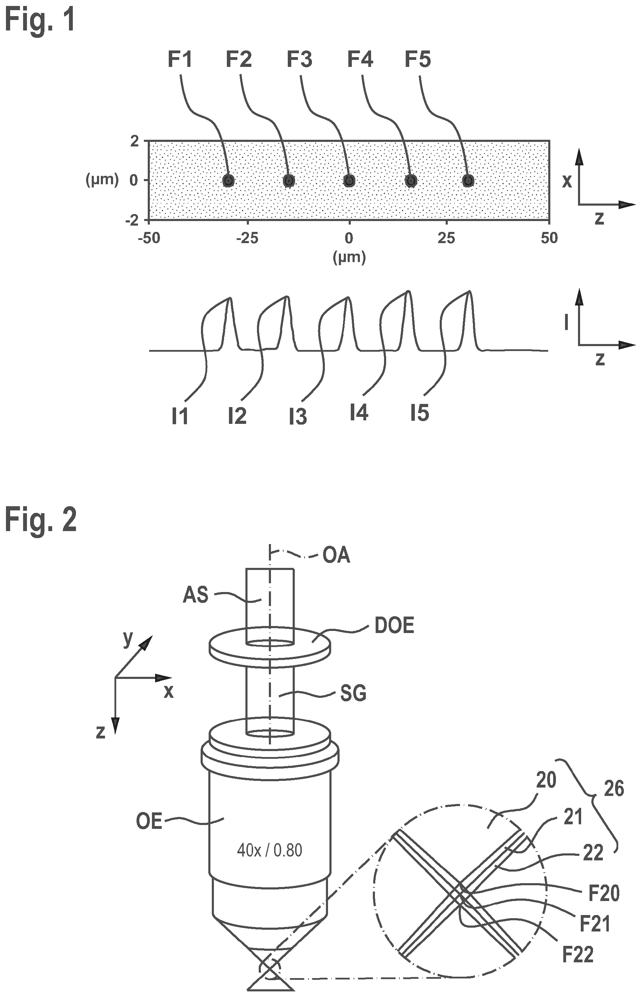

- Figur 1: eine Intensitätsverteilung und örtliche Verteilung von Fokuspunkten eines diffraktiven optischen Elements entlang einer optischen Achse eines Strahlengangs eines Zweiphotonenmikroskops;
- Figur 2: eine schematische Ansicht einer Anordnung eines diffraktiven optischen Elements benachbart zu einem Objektivelement mit einem durch beide optische Elemente erzeugten Strahlengang mit mehreren Fokuspunkten gemäß einem ersten Ausführungsbeispiel der vorliegenden Erfindung;

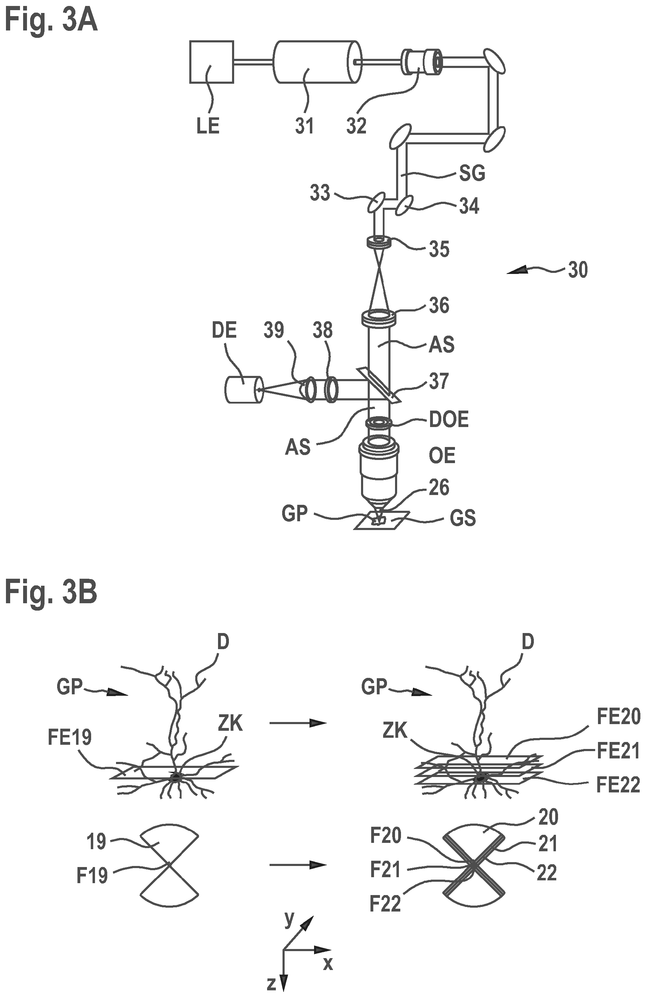

- Figur 3A: eine schematische Ansicht einer Vorrichtung für die Zweiphotonenmikroskopie mit einem diffraktiven optischen Element benachbart zu einem Objektivelement und dem durch die optischen Elemente einer Optikeinheit des Zweiphotonenmikroskops erzeugten Strahlengang zur Anregung und Messung einer Gewebeprobe gemäß einem zweiten Ausführungsbeispiel der vorliegenden Erfindung;
- Figur 3B: ein Vergleich einer Messung der Gewebeprobe in einer Fokusebene mit einer Messung der Gewebeprobe in mehreren Fokusebenen in Anregungsrichtung auf die Gewebeprobe;

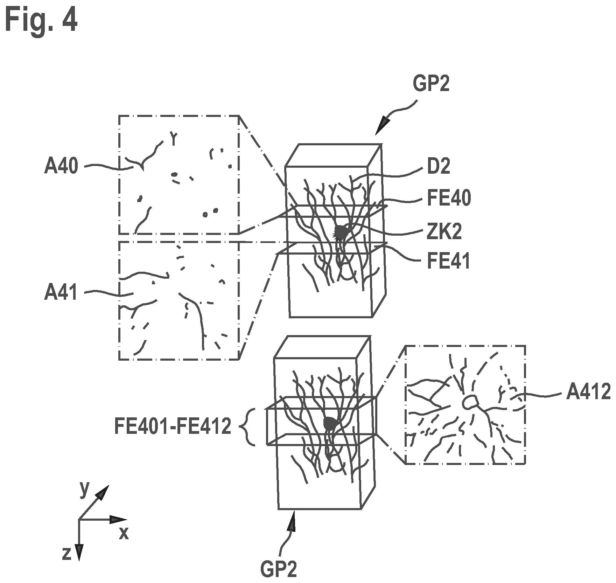

- Figur 4: schematische Volumenansichten einer Gewebeprobe mit Zweiphotonenmikroskopie-Aufnahmen in zwei und elf Fokusebenen;

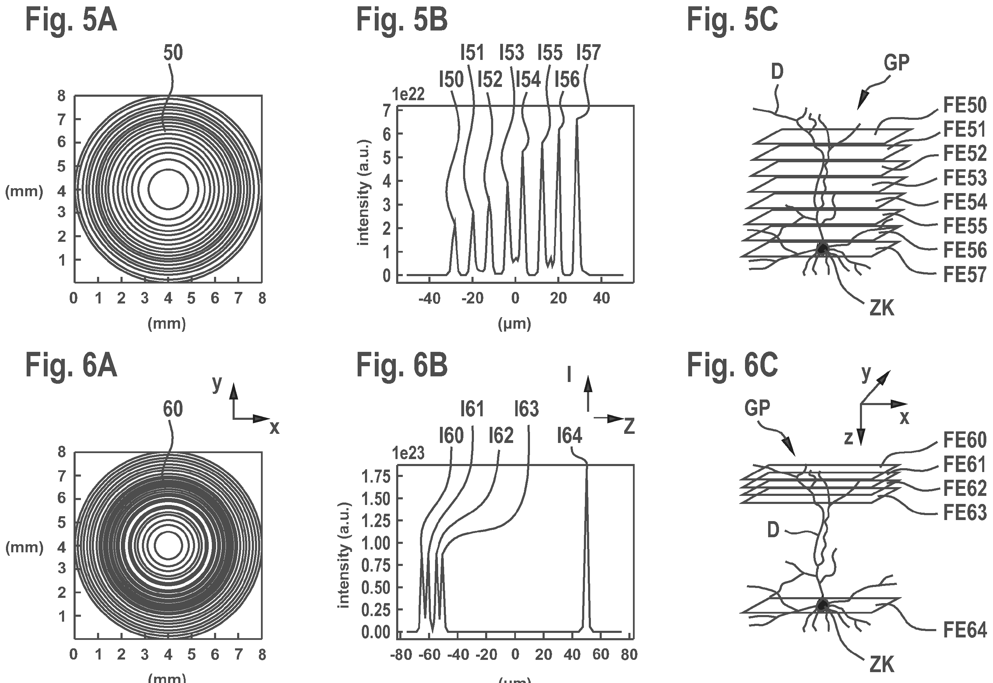

- Fig. 5A, 5B, 5C: ein Phasenprofil (Figur 5A) eines ersten diffraktiven optischen Elements, dessen Intensitätsverteilung mit mehreren gleichbeabstandeten Peaks mit in Anregungsrichtung zunehmenden Intensitäten (Figur 5B) und eine schematische räumliche Ansicht der Fokusebenen in der Gewebeprobe (Figur 5C);
- Fig. 6A, 6B, 6C: ein Phasenprofil (Figur 6A) eines zweiten diffraktiven optischen Elements, dessen Intensitätsverteilung mit mehreren gleichbeabstandeten Peaks gleicher Intensität und einem davon in Anregungsrichtung beabstandeten weiteren Peak mit einer erhöhten Intensität (Figur 6B) und eine schematische räumliche Ansicht der Fokusebenen in der Gewebeprobe (Figur 6C);

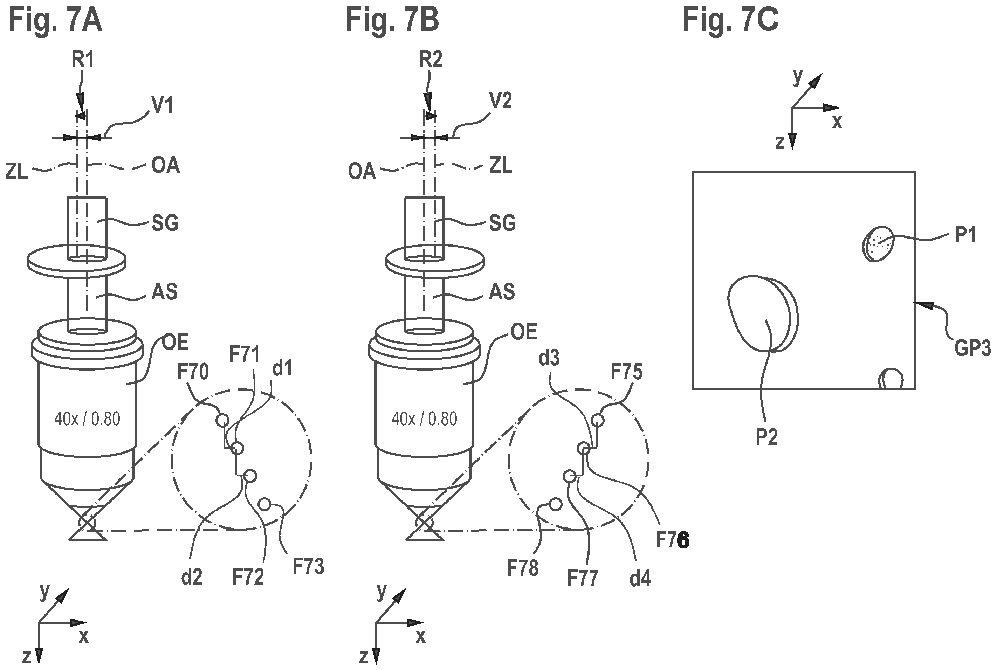

- Fig. 7A, 7B, 7C: eine erste schematische Ansicht einer Anordnung eines zu einer optischen Achse eines Objektivelements in die negative X-Richtung verschobenen diffraktiven optischen Elements benachbart zu dem Objektivelement (Figur 7A), eine zweite schematische Ansicht einer Anordnung des zu der optischen Achse des Objektivelements in die X-Richtung verschobenen diffraktiven optischen Elements benachbart zu dem Objektivelement (Figur 7B) und ein anaglyphisches 3D-Bild, in dem ein erstes Bild, das mit der in Fig. 7A dargestellten Anordnung von einer Gewebeprobe aufgenommen ist, mit einem zweiten Bild, das mit der in Fig. 7B dargestellten Anordnung von der Gewebeprobe aufgenommen ist, überlagert sind (Figur 7C); und

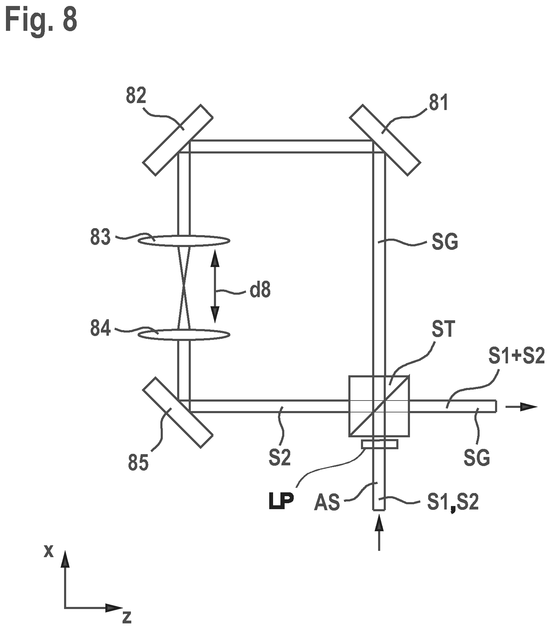

- Figur 8: eine schematische Ansicht einer Anordnung aus optischen Elementen mit einem Strahlteiler als Teil der Optikeinheit des Zweiphotonenmikroskops zur Aufteilung des Anregungsstrahls in zwei Strahlen, die nachfolgend vereinigt werden, um zwischen Fokuspunkten auftretende Abstände in Anregungsrichtung mit den Fokuspunkten entsprechenden Intensitäten auszuleuchten.

Figur 1 zeigt eine Intensitätsverteilung eines diffraktiven optischen Elementes, kurz DOE genannt, wobei DOE auch als Bezugszeichen verwendet wird, mit fünf Peaks I1, I2, I3, I4, I5 in Z-Richtung, die einer Anregungsrichtung eines Anregungsstrahls einer Lasereinheit eines Zweiphotonenmikroskops nach einer Ausführungsform der Erfindung entspricht. Die Peaks weisen jeweils eine im Wesentlichen gleiche Intensität I auf. Das diffraktive optische Element ist benachbart im Strahlengang des Zweiphotonenmikroskops vor einem Objektivelement einer Optikeinheit des Zweiphotonenmikroskops auf einer optischen Achse des Strahlengangs angeordnet. Nach Durchlaufen des Objektivelementes erzeugt der durch das DOE multifokal geformte Anregungsstrahl fünf entlang der optischen Achse gleichbeabstandete Fokuspunkte F1, F2, F3, F4, F5, die in X-Richtung jeweils eine Ausdehnung aufweisen, die im Wesentlichen einer Ausdehnung in Z-Richtung entspricht. In der X/Z-Ebene weisen die Fokuspunkte jeweils eine beugungsbegrenzte Auflösung auf, die von der numerischen Apertur, abgekürzt NA genannt, des Objektivelementes abhängig ist.

Figur 2 zeigt eine schematische Ansicht einer Anordnung eines diffraktiven optischen Elements DOE benachbart zu einem Objektivelement OE mit einem durch beide optische Elemente erzeugten Strahlengang SG mit mehreren Fokuspunkten F20, F21, F22 gemäß einem ersten Ausführungsbeispiel der vorliegenden Erfindung. Die Fokuspunkte F20, F21, F22 werden jeweils durch Ausgangsstrahlen 20, 21, 22 gebildet, in die der auf das DOE treffende Anregungsstrahl AS durch das DOE unterteilt ist. Jeder Fokuspunkt F20, F21, F22 der von den Ausgangsstrahlen 20, 21, 22 jeweils gebildeten Fokuspunkte F20, F21, F22 ist durch Beugung einer vollständigen Wellenfront des Anregungsstrahls AS gebildet. Die Ausgangsstrahlen 20, 21, 22 bilden ein Ausgangsstrahlenbündel 26. Das DOE ist wie das Objektivelement OE zentriert zu der optischen Achse OA des Strahlengangs SG und in einer X/Y-Ebene senkrecht zur optischen Achse OA angeordnet und so ausgeführt, dass die Fokuspunkte F20, F21, F22 im Wesentlichen gleichbeabstandet auf der optischen Achse OA in Z-Richtung zum Liegen kommen.

Figur 3A zeigt eine schematische Ansicht einer Vorrichtung 30 für die Zweiphotonenmikroskopie mit dem diffraktiven optischen Element DOE benachbart zu dem Objektivelement OE und dem durch die optischen Elemente 31, 32, 33, 34, 35, 36, 37, 38 und 39 einer Optikeinheit des Zweiphotonenmikroskops erzeugten Strahlengang SG zur Anregung und Messung einer auf oder unter einer Glasscheibe GS angeordneten Gewebeprobe GP gemäß einem zweiten Ausführungsbeispiel der vorliegenden Erfindung. Im Folgenden wird die Optikeinheit durch die Bezugszeichen 31, 32, 33, 34, 35, 36, 37, 38 und 39 als Summenbezugszeichen repräsentiert, obwohl neben den optischen Elementen 31 bis 39 auch das diffraktive optische Element DOE und das Objektivelement OE von der Optikeinheit umfasst sind.

Die Vorrichtung 30 umfasst eine Lasereinheit LE, insbesondere in Form eines Lasers, der Licht im nahen Infrarotbereich, kurz NIR genannt, aussendet. Der Anregungsstrahl AS der Lasereinheit LE kann eine Pockels-Zelle 31 passieren, die zum schnellen Schalten, z.B. innerhalb von Nanosekunden, und auf diese Weise auch für eine kontinuierliche Modulation des Anregungsstrahls AS in Phase, Polarisation und Intensität eingerichtet ist. Danach kann der Anregungsstrahl AS einen Strahlaufweitungselement 32 wie in Fig. 3A dargestellt durchlaufen, das den Anregungsstrahl beispielsweise um den Faktor 2 aufweitet. Über Spiegelelemente kann der Anregungsstrahl AS dann auf scannende Spiegelelemente oder Scan-Spiegel 33, 34 umgelenkt werden, um den Anregungsstrahl mit einem der Scan-Spiegel 33, 34 in X-Richtung und mit dem anderen der Scan-Spiegel 33, 34 in Y-Richtung zu bewegen bzw. abzulenken. Danach kann der Strahlengang SG des Anregungsstrahls AS durch ein Scan-Spiegelelement 35 und ein zu diesem Scan-Spiegelelement 35 benachbart auf der optischen Achse OA angeordneten Tubuslinsenelement 36 refokussiert und aufgeweitet werden, um auf ein dichroitisches Spiegelelement 37 zu fallen. Danach kann der Anregungsstrahl auf das diffraktive optische Element DOE, nachfolgend unmittelbar auf das Objektivelement OE und anschließend in das Ausgangsstrahlenbündel 26 mit Ausgangsstrahlen 20, 21, 22 umgewandelt auf die Gewebeprobe GP fallen, um die Gewebeprobe anzuregen. Ein in Reaktion auf die Anregung von der Gewebeprobe oder Teilen hiervon in Richtung des Objektivelementes OE ausgesandtes optisches Signal kann durch das Objektivelement OE und das diffraktive optische Element DOE hindurchgeleitet auf das dichroitische Spiegelelement 37 fallen, um in Richtung einer Detektoreinheit DE nach Durchlaufen eines Infrarotfilterelementes 38 und eines Kondensorlinsenelementes 39 umgeleitet zu werden zur Erfassung des von dem Objektivelement OE aufgenommenen optischen Signals von der Gewebeprobe GP. Mittels der scannenden Spiegelelemente 33, 34 und des unmittelbar vor dem Objektivelement OE angeordneten diffraktiven optischen Elementes DOE können mit der Detektoreinheit DE, die als Photomultiplier ausgeführt sein kann, Aufnahmen oder Bilder eines von dem Anregungsstrahl ausgeleuchteten Volumens der Gewebeprobe GP in Echtzeit, beispielsweise mit einer Bildrate von im Wesentlichen 200 Hz oder mehr bei hoher Tiefenschärfe auf einfache Weise aufgenommen werden. Vorhandene Zweiphotonenmikroskope ohne diffraktives optisches Element können auf einfache und/oder kostengünstige Weise lediglich dadurch ertüchtigt werden, volumetrische Echtzeitaufnahmen auf einfache Weise durchzuführen, indem unmittelbar vor dem Objektivelement OE das multifokale diffraktive optische Element angeordnet wird.

In Figur 3B ist ein Vergleich einer Messung der Gewebeprobe GP mit einem Zellkern ZK und Dendriten D in einer Fokusebene FE19 mit einer Messung der Gewebeprobe GP in mehreren Fokusebenen FE20, FE21, FE22 in Anregungsrichtung in Z-Richtung auf die Gewebeprobe GP gezeigt. Ein Ausgangsstrahl 19 erzeugt lediglich die eine Fokusebene FE19, die ungefähr auf Höhe des Zellkerns ZK der Gewebeprobe GP in Z-Richtung liegt. Demgegenüber erlaubt das benachbart vor dem Objektivelement OE angeordnete und multifokale diffraktive optische Element DOE eine Abbildung mit mehreren aus den Ausgangsstrahlen 20, 21, 22 gebildeten Fokuspunkten F20, F21, F22 und damit in mehreren Fokusebenen FE20, FE21, FE22 in Z-Richtung in der Tiefe der Gewebeprobe GP, die derart voneinander beanstandet sind, dass eine Höhe des Zellkerns ZK bestimmt oder zumindest abgeschätzt werden kann. Der Zellkern kann auf diese Weise in einer Projektion von mehreren Ebenen in der Tiefe der Gewebeprobe, entsprechend einem Volumen der Gewebeprobe GP in X/Y/Z-Richtungen, mit hoher Schärfentiefe abgebildet werden, wobei auch Echtzeitaufnahmen mit Bildraten von größer oder gleich im Wesentlichen 200 Hz möglich sind.

Figur 4 zeigt schematische Volumenansichten einer Gewebeprobe GP2 in X, Y und Z-Richtung mit Zweiphotonenmikroskopie-Aufnahmen A40, A41 in zwei Fokusebenen FE40, FE41, wobei jeweils die Fokusebene FE40 oberhalb eines Zellkerns ZK2 entgegen der Z-Richtung von der Aufnahme A40 und die Fokusebene FE41 unterhalb des Zellkerns ZK2 in Z-Richtung von der Aufnahme A41 abgebildet ist. Die Aufnahmen A40, A41 zeigen jeweils Schnitte der Gewebeprobe GP in der X/Y-Ebene mit Dendriten D2 aus unterschiedlichen Tiefen der Gewebeprobe GP oberhalb (Aufnahme A40) und unterhalb des Zellkerns ZK2 (Aufnahme A41). Weiter ist in Figur 4 eine Volumenaufnahme A412 von Dendriten D2 der gleichen Gewebeprobe GP aus elf unterschiedlichen Tiefen ober- und unterhalb des Zellkerns ZK2 und auf Höhe des Zellkerns ZK2 als Projektion der in der X/Y-Ebene überlagert dargestellten elf Fokusebenen FE401, FE402 bis FE412 gezeigt. Man erkennt deutlich den gegenüber den Aufnahmen A40, A41 erhöhten Bildinhalt der Dendriten D2 bei gegenüber den Aufnahmen A40, A41 unverändert hoher Tiefenschärfe. Die Aufnahme A412 kann in Echtzeit mit Bildraten von größer oder gleich im Wesentlichen 200 Hz aufgenommen werden.

Figur 5A zeigt ein Phasenprofil 50 eines ersten diffraktiven optischen Elements in der X/Y-Ebene. Eine Verteilung der Intensität I des ersten diffraktiven optischen Elements mit acht gleichbeabstandeten Peaks in Anregungsrichtung, die der Z-Richtung entspricht, ist ohne Gewebeprobe GP in Figur 5B gezeigt. Die Intensitäten I50, I51, I52, I53, I54, I55, I56, I57 der Peaks nehmen in Anregungsrichtung, also mit zunehmender Tiefe der Gewebeprobe GP vom ersten Peak zum achten Peak kontinuierlich zu. In Figur 5C ist eine schematische räumliche Ansicht von durch die Peaks mit den Intensitäten I50, I51, I52, I53, I54, I55, I56, I57 jeweils gebildeten Fokusebenen FE50, FE51, FE52, FE53, FE54, FE55, FE56, FE57 in der Gewebeprobe GP gezeigt. Mit zunehmender Tiefe in Z-Richtung nimmt die Intensität I in jeder Fokusebene zu, so dass am Ort des Zellkerns ZK die höchste Intensität I57 des achten Peaks vorliegt. Mit den in Anregungsrichtung zunehmenden Peakintensitäten I50, I51, I52, I53, I54, I55, I56, I57 kann eine zunehmende Schwächung dieser Intensitäten in der Anregungsrichtung durch eine Streuung des Anregungsstrahls in der Gewebeprobe GP ausgeglichen werden. Auf diese Weise können neben dem Zellkern ZK Dendriten D in sämtlichen Fokusebenen mit im Wesentlichen gleicher oder zumindest ähnlicher Intensität ausgeleuchtet und als Projektion in einem aufgenommenen Bild mit im Wesentlichen gleicher oder zumindest ähnlicher Tiefenschärfe abgebildet werden.

Figur 6A zeigt ein Phasenprofil 60 eines zweiten diffraktiven optischen Elements in der X/Y-Ebene. Eine Verteilung der Intensität I des zweiten diffraktiven optischen Elements mit vier gleichbeabstandeten Peaks im Wesentlichen gleicher Intensität in Anregungsrichtung, die der Z-Richtung entspricht, und einem davon in Anregungsrichtung beabstandeten weiteren Peak mit einer gegenüber den gleichbeabstandeten Peaks im Wesentlichen gleicher Intensität erhöhten Intensität ist ohne Gewebeprobe GP in Figur 6B gezeigt. Die Intensitäten I60, I61, I62 und I63 der vier im Wesentlichen gleichbeabstandeten Peaks sind im Wesentlichen gleich und ca. halb so hoch wie die Intensität I64 des am tiefsten liegenden Peaks, der einen Abstand zum benachbarten Peak mit der Intensität I63 aufweist, der ein Vielfaches größer ist als der im Wesentlichen gleiche Abstand der Peaks voneinander mit den Intensitäten I60, I61, I62 und I63.

In Figur 6C ist eine schematische räumliche Ansicht von durch die Peaks mit den Intensitäten I60, I61, I62, I63 und I64 jeweils gebildeten Fokusebenen FE60, FE61, FE62, FE63 und FE64 in der Gewebeprobe GP gezeigt. Nahe einer Oberfläche (nicht dargestellt) der Gewebeprobe GP, also in geringer Tiefe der Probe, ist die Streuung des Anregungsstrahls in der Gewebeprobe GP gering und die Intensitäten I60, I61, I62, I63 können im Wesentlichen gleich sein und dennoch können die Dendriten D in den Fokusebenen FE60, FE61, FE62, FE63 mit im Wesentlichen gleicher oder zumindest ähnlicher Intensität ausgeleuchtet und als Projektion in einem aufgenommenen Bild mit im Wesentlichen gleicher oder zumindest ähnlicher Tiefenschärfe abgebildet werden. Die Fokusebene FE64 in deutlich größerer Tiefe der Gewebeprobe GP ist mit der Intensität I64 deutlich heller ausgeleuchtet als die Fokusebenen FE60, FE61, FE62, FE63 mit den Intensitäten I60, I61, I62, I63. Am Ort des Zellkerns ZK mit der Fokusebene FE64, die deutlich tiefer liegt als die Fokusebenen FE60, FE61, FE62 und FE64, ist ein Grad an Streuung des Anregungsstrahls deutlich größer als am Ort der Fokusebenen FE60, FE61, FE62 und FE64. Aufgrund der höheren Intensität I64 am Ort des Zellkerns ZK verglichen zu den Intensitäten I60, I61, I62, I63 in Oberflächennähe der Gewebeprobe GB können die dortigen Dendriten D in den Fokusebenen FE60, FE61, FE62, FE63 mit im Wesentlichen gleicher oder zumindest ähnlicher Intensität wie der Zellkern ZK in der Fokusebenen FE64 ausgeleuchtet und die Dendriten D und der Zellkern ZK können als Projektion in einem aufgenommenen Bild mit im Wesentlichen gleicher oder zumindest ähnlicher Tiefenschärfe abgebildet werden.

Es kann auch sein, dass man z. B. eine tiefere Ebene besonders schwach ausleuchten möchte, wenn die beobachtete Struktur in der tieferen Ebene deutlich heller ist als in einer höheren Ebene. Wenn man beispielsweise oberflächliche Dendriten D messen möchte, so sollten diese Dendriten D relativ hell in der Detektoreinheit DE erscheinen, um eine ausreichende Signalqualität zu erhalten. Ein tiefer gelegener Zellkörper wie der Zellkern ZK muss dagegen nicht so stark ausgeleuchtet sein, da er typischerweise größer ist als die eher filigranen Dendriten D und Signale in Reaktion auf den Anregungsstrahl erzeugt, die deutlich stärker sind als die Signale, die von den Dendriten D erzeugt werden. In diesem Fall kann die Intensität I64 kleiner ausfallen als die Intensitäten I60, I61, I62, I63.

In Figur 7A ist eine erste schematische Ansicht einer Anordnung eines zu der optischen Achse OA des Objektivelements OE in die negative X-Richtung in Richtung R1 um eine Verschiebung V1 aus seiner zentralen Lage ZL verschobenen diffraktiven optischen Elements DOE benachbart zu dem Objektivelement OA gezeigt. Das diffraktive optische Element DOE ist rahmenlos dargestellt. Ausführungsformen, bei denen das diffraktive optische Element einen Rahmen aufweist, der den beugenden optischen Bereich des diffraktiven optischen Elements ganz oder teilweise umschließt, sind ebenfalls möglich. Der Anregungsstrahl AS durchläuft daher das diffraktive optische Element DOE um die Verschiebung V1 dezentriert, wobei ein Durchmesser des Strahlengangs SG des Anregungsstrahls AS durch das um die Verschiebung V1 dezentriert durchlaufene diffraktive optische Element DOE unverändert bleiben sollte. Das diffraktive optische Element DOE ist gegenüber der optischen Achse OA so aus seiner zu der optischen Achse OA zentralen Lage ZL um die Verschiebung V1 heraus verschoben, dass jeder der Fokuspunkte F70, F71, F71, F73, der in Anregungsrichtung in Z-Richtung jeweils zu einem anderen der Fokuspunkte benachbart ist, einen positiven Abstand d1, d2 zu dem anderen Fokuspunkt in eine gleiche Richtung senkrecht zu der Anregungsrichtung aufweist. So ist der Fokuspunkt F71 um den Abstand d1 in X-Richtung zu dem oberhalb von dem Fokuspunkt F71 angeordneten Fokuspunkt F70 verschoben. Der Fokuspunkt F72 ist um den Abstand d2 in X-Richtung zu dem oberhalb von dem Fokuspunkt F72 angeordneten Fokuspunkt F71 verschoben. Die Abstände d1 und d2 können im Wesentlichen gleiche Werte aufweisen.

In Figur 7B ist eine zweite schematische Ansicht einer Anordnung des zu der optischen Achse OA des Objektivelements OE in die positive X-Richtung in Richtung R2 um eine Verschiebung V2 aus seiner zentralen Lage ZL verschobenen diffraktiven optischen Elements DOE benachbart zu dem Objektivelement OA gezeigt. Der Anregungsstrahl AS durchläuft daher das diffraktive optische Element DOE um die Verschiebung V2 dezentriert, wobei ein Durchmesser des Strahlengangs SG des Anregungsstrahls AS durch das um die Verschiebung V2 dezentriert durchlaufene diffraktive optische Element DOE unverändert bleiben sollte. Das diffraktive optische Element DOE ist gegenüber der optischen Achse OA so aus seiner zu der optischen Achse OA zentralen Lage ZL um die Verschiebung V2 heraus verschoben, dass jeder der Fokuspunkte F75, F76, F77, F78, der in Anregungsrichtung in Z-Richtung jeweils zu einem anderen der Fokuspunkte benachbart ist, einen positiven Abstand d3, d4 zu dem anderen Fokuspunkt in eine gleiche Richtung senkrecht zu der Anregungsrichtung aufweist. So ist der Fokuspunkt F76 um den Abstand d3 entgegen der X-Richtung zu dem oberhalb von dem Fokuspunkt F76 angeordneten Fokuspunkt F75 verschoben. Der Fokuspunkt F77 ist um den Abstand d4 entgegen der X-Richtung zu dem oberhalb von dem Fokuspunkt F77 angeordneten Fokuspunkt F76 verschoben. Die Abstände d3 und d4 können im Wesentlichen gleiche Werte aufweisen und können im Wesentlichen gleiche Werte zu den Werten von d3 und d4 aufweisen.

In Figur 7C ist ein anaglyphisches 3D-Bild dargestellt, in dem ein erstes Bild, das mit der in Figur 7A dargestellten Anordnung von der Gewebeprobe GP3 aufgenommen ist, mit einem zweiten Bild, das mit der in Figur 7B dargestellten Anordnung von der Gewebeprobe GP3 aufgenommen ist, überlagert sind. Eine Auswertung des anaglyphischen 3D-Bildes der Gewebeprobe GP3 mit Objekten in Form von Pollen P1, P2 ermöglicht es, die Tiefe der Pollen P1, P2 zu bestimmen oder zumindest abzuschätzen. In dem ersten Bild ist eine erste Achse, auf der die Fokuspunkte F70, F71, F72, F73 liegen, um einen im Wesentlichen gleichen Winkel in die gegengesetzte Richtung verschoben zu einer zweiten Achse, auf der die Fokuspunkte F75, F76, F77, F78 liegen. Sieht man sich nun die Pollen P1, P2 an, so stellt man fest, dass bei dem Pollen 2 eine leichte Schattierung nach rechts und bei dem anderen Pollen P1 eine leichte Schattierung nach links vorliegt. Das liegt daran, das der entsprechende Fokuspunkt, der in derselben Fokusebene wie das Pollen lag, leicht nach rechts bzw. links verschoben liegt. Wenn man die beiden Aufnahmen der Pollen P1, P2 im anaglyphischen 3D-Bild ansieht, und kein Versatz zwischen den Schattierungen der Pollen P1, P2 vorliegen würde, kann man schließen, dass das Pollen P1, P2 in der Mitte der abgedeckten Tiefe liegt, nämlich dort, wo sich die ersten und zweiten Achsen, auf denen die schräggestellten Fokuspunkte F70, F71, F72, F72 auf der ersten Achse und F75, F76, F77, F78 auf der zweiten Achse liegen, schneiden. Liegt ein Versatz der Schattierungen zueinander vor, so kann man über den Unterschied zwischen dem ersten Bild und dem zweiten Bild auf die Tiefe des Objekts in Form des Pollens P1 oder P2 schließen. Im Hinblick auf die Abbildung bedeutet das, dass das Pollen P1 über-/oberhalb der mittleren Fokusebene, in der sich die ersten und zweiten Achsen schneiden, liegen muss und das Pollen P2 darunter, da die beiden Bilder/Aufnahmen für die beiden Pollen P1, P2 gegensätzlich verschobene Schattierungen aufweisen. Anstelle des Verschiebens mit Verschiebungen V1, V2 in entgegengesetzte Richtungen ist es auch möglich, ein DOE bereits mit einer schrägen Stellung der Fokuspunkte zu erzeugen, und anschließend das DOE um 180 Grad zu drehen, anstatt es wie in den Figuren 7A und 7B gezeigt lateral zu der optischen Achse gegeneinander zu verschieben.

Figur 8 zeigt eine schematische Ansicht einer Anordnung aus optischen Elementen ST, 81, 82, 83, 84, 85 mit einem Strahlteiler ST als Teil der Optikeinheit des Zweiphotonenmikroskops zur Aufteilung des Anregungsstrahls AS in zwei Strahlen S1, S2, die nachfolgend zu einem Strahlengang SG vereinigt werden, um zwischen Fokuspunkten auftretende Abstände in Anregungsrichtung mit den diesen Fokuspunkten entsprechenden Intensitäten auszuleuchten. Der Strahlteiler ST kann als weiteres optisches Element der Optikeinheit 31, 32 - 39 derart angeordnet sein, dass der am Strahlteiler ST eintreffende Anregungsstrahl AS in die ersten und zweiten Strahlen S1, S2 geteilt wird. Das Trennen in die zwei Strahlen S1, S2 und Vereinigen des zweiten Strahls S2 mit dem ersten Strahl S1 kann mittels einer Lambda/2-Platte LP erreicht werden, die vor dem Strahlteiler ST so angeordnet ist, dass der am Strahlteiler ST eintreffende Anregungsstrahl AS mit den Polarisationsanteilen in X- und Y-Richtung, der die ersten und zweiten Strahlen S1, S2 vor ihrer Trennung umfasst, die Lambda/2-Platte vor Eintritt in den Strahlteiler ST durchläuft, und dem Strahlteiler ST, der polarisationsabhängig ausgeführt ist, erreicht werden. Die beiden Strahlen S1, S2 können dann unterschiedliche Wege nehmen, da sie die X- und Y-polarisierte Komponente des ursprünglichen Strahles AS darstellen. Der erste Strahl S1 wird reflektiert, während der zweite Strahl S2 geradlinig durch den Strahlteiler ST läuft. Über die Lambda/2-Platte LP, auch λ/2-Platte oder im Englischen halfwave-plate genannt, kann man die Lichtleistungsverteilung zwischen der X- und Y-Polarisationskomponente des am Strahlteiler ST eintreffenden Anregungsstrahles AS einstellen und darüber die Intensität der beiden Strahlen S1, S2 zueinander über eine Rotation der Lambda/2-Platte um die optische Achse OA einstellen.

Der erste Strahl S1 kann unmittelbar vom Strahlteiler ST reflektiert werden und der zweite Strahl S2 kann von Spiegelelementen 81, 82 reflektiert und anschließend von mit einem variablen Abstand d8 voneinander beabstandet angeordneten Fokussierlinsen 83, 84 refokussiert werden. Aufgrund des gegenüber dem optischen Weg des ersten Strahls S1 längeren optischen Weges des zweiten Strahls S2 kann der zweite Strahl S2 den Strahlteiler ST zeitverzögert gegenüber dem ersten Strahl S1 zur Vereinigung mit dem ersten Strahl S1 durchlaufen (S1 + S2), um jeweils die zwischen den Fokuspunkten F20, F21, F22 auftretenden Abstände in Anregungsrichtung, die der Z-Richtung entspricht, mit den Fokuspunkten F20, F21, F22 entsprechenden Intensitäten auszuleuchten. Mit der in Figur 8 gezeigten Anordnung wird, um mechanische Elemente wie ein für den gleichen Effekt prinzipiell geeignetes Piezoobjektiv, zu vermeiden, eine rein optische Lösung vorgeschlagen, die eine Verzögerung des Lichtstrahles und eine Veränderung der Kollimation nutzt. Durch die Vermeidung des mechanischen optischen Elements in Form beispielsweise des Piezoobjektivs kann mit höheren Bildraten bei gleichzeitig reduzierter Wartung aufgrund des Wegfalls mechanischer Komponenten gemessen werden.

Die unter Bezug auf die dargestellten Ausführungsformen beschriebenen Merkmale der Erfindung können auch bei anderen Ausführungsformen der Erfindung vorhanden sein, außer wenn es anders angegeben ist oder sich aus technischen Gründen von selbst verbietet.

## Patentansprüche

1. Vorrichtung (30) für die Zweiphotonenmikroskopie zur Gewinnung von Informationen aus einer biologischem Gewebeprobe (GP), mit
- einer Lasereinheit (LE) zur Erzeugung eines Anregungsstrahls (AS),
- einer zwischen der Lasereinheit (LE) und der Gewebeprobe (GP) angeordneten Optikeinheit (31, 32 - 39) mit einem Objektivelement (OE), das einen Strahlengang (SG) der Optikeinheit (31, 32 - 39) zur Anregung der Gewebeprobe (GP) in einer Anregungsrichtung (Z) des Anregungsstrahls (AS) zur Gewebeprobe (GP) hin als letztes optisches Element abschließt und ausgebildet ist, den Anregungsstrahl (AS) zur Erzeugung eines optischen Signals an unterschiedlichen Orten in oder an der Gewebeprobe (GP) in einer Ebene (X, Y) senkrecht zu der Anregungsrichtung (Z) zu fokussieren, und
- einer Detektoreinheit (DE) zur Erfassung des von dem Objektivelement (OE) aufgenommenen optischen Signals von der Gewebeprobe (GP),
wobei ein von der Optikeinheit (31, 32 - 39) umfasstes multifokales diffraktives optisches Element (DOE) in den Strahlengang (SG) der Optikeinheit (31, 32 - 39) in der Anregungsrichtung (Z) des Anregungsstrahls (AS) zur Gewebeprobe (GP) hin als vorletztes optisches Element benachbart zu dem Objektivelement (OE) angeordnet und ausgebildet ist, den Anregungsstrahl (AS) nach Durchlaufen des Objektivelements (OE) in Ausgangsstrahlen (20, 21, 22) zu unterteilen, die jeweils einen Fokuspunkt (F20, F21, F22) in der Anregungsrichtung (Z) auf und/oder beabstandet von einer optischen Achse (OA) des Strahlengangs (SG) der Optikeinheit (31, 32 - 39) bilden, wobei jeder Fokuspunkt (F20, F21, F22) der von den Ausgangsstrahlen (20, 21, 22) jeweils gebildeten Fokuspunkte (F20, F21, F22) durch Beugung einer vollständigen Wellenfront des Anregungsstrahls (AS) gebildet ist.

2. Vorrichtung nach Anspruch 1, wobei das DOE als ein einziges optisches Element ausgeführt ist, das in aus mehreren Elementen integrierter Form oder in monolithischer Form vorliegt.

3. Vorrichtung nach Anspruch 1 oder Anspruch 2, wobei das diffraktive optische Element (DOE) zur Steuerung von Intensitäten (I50, I51 - I57; I60, I61 - I64) der Fokuspunkte und Abständen zwischen den Fokuspunkten mittels eines gewichteten Gerchberg-Saxton-Algorithmus, eines gradient-descent-Verfahrens oder einer analytischen Methode berechnet ist, um ein Computer generiertes Hologramm zu erzeugen, das eine Abbildung entsprechend einer multifokalen Linse liefert.

4. Vorrichtung nach Anspruch 1 oder Anspruch 2, wobei das diffraktive optische Element (DOE) so ausgeführt ist, dass sämtliche Fokuspunkte in der Anregungsrichtung (Z) voneinander im Wesentlichen gleichbeabstandet sind und entweder im Wesentlichen gleiche Intensitäten (I1, I2 - I5; I60, I61 - I63) zueinander aufweisen oder voneinander unterschiedliche Intensitäten (I50, I51 - I57) aufweisen, die in Anregungsrichtung (Z) zunehmen, um eine zunehmende Schwächung der Intensitäten (I50, I51 - I57) der Fokuspunkte in Anregungsrichtung (Z) durch eine Streuung in der Gewebeprobe (GP) auszugleichen.

5. Vorrichtung nach Anspruch 4, wobei das diffraktive optische Element (DOE) so ausgeführt ist, dass zusätzlich zu den in der Anregungsrichtung voneinander im Wesentlichen gleichbeabstandeten Fokuspunkten zumindest ein weiterer Fokuspunkt in Anregungsrichtung um ein Mehrfaches des Abstandes der gleichbeabstandeten Fokuspunkte voneinander beabstandet von den gleichbeabstandeten Fokuspunkten gebildet ist, wobei eine Intensität (I64) des weiteren Fokuspunktes unabhängig von einer Intensität (I63) des zu dem weiteren Fokuspunkt in entgegengesetzter Anregungsrichtung (Z) benachbarten Fokuspunktes festlegbar oder festgelegt ist.

6. Vorrichtung nach einem der vorhergehenden Ansprüche, wobei das diffraktive optische Element (DOE) entweder gegenüber der optischen Achse (OA) so ausgerichtet ist, insbesondere zu der optischen Achse zentriert ist, dass sämtliche Fokuspunkte (F20, F21, F22) auf der optischen Achse (OA) liegen, oder gegenüber der optischen Achse (OA) so ausgerichtet ist, insbesondere aus einer zu der optischen Achse (OA) zentralen Lage (ZL) heraus verschoben ist, dass jeder der Fokuspunkte (F70, F71 - F73; F75, F76 - F78), der in Anregungsrichtung (Z) jeweils zu einem anderen der Fokuspunkte benachbart ist, einen positiven Abstand (d1, d2; d3, d4) zu dem anderen Fokuspunkt in eine gleiche Richtung senkrecht zu der Anregungsrichtung (Z) aufweist.

7. Vorrichtung nach einem der vorhergehenden Ansprüche, wobei das diffraktive optische Element (DOE) ausgebildet ist, mit unterschiedlichen Wellenlängen des Anregungsstrahls (AS) derart verwendet zu werden, dass die von den unterschiedlichen Wellenlängen gebildeten Fokuspunkte jeweils in der Anregungsrichtung (Z) und in einer Ebene (X, Y) senkrecht zu der Anregungsrichtung (Z) zusammenfallen, insbesondere, um Intensitäten verschiedener Farbstoffe an oder in der Gewebeprobe (GP) gleichzeitig messen zu können, z. B. Glutamat und Calcium Indikatoren.

8. Vorrichtung nach einem der vorhergehenden Ansprüche, wobei in den Strahlengang (SG) der Optikeinheit (31, 32 - 39) entweder ein Piezoobjektiv als Objektivelement (OE) der Optikeinheit (31, 32 - 39) angeordnet ist, oder ein Strahlteiler (ST) als weiteres optisches Element der Optikeinheit (31, 32 - 39) derart angeordnet ist, dass der am Strahlteiler (ST) eintreffende Anregungsstrahl (AS) in erste und zweite Strahlen (S1, S2) geteilt wird, wovon der erste Strahl (S1) unmittelbar vom Strahlteiler reflektiert wird und der zweite Strahl (S2) refokussiert und gegenüber dem ersten Strahl (S1) zeitverzögert den Strahlteiler (ST) zur Vereinigung mit dem ersten Strahl (S1) durchläuft, um jeweils die zwischen den Fokuspunkten (F20, F21, F22) auftretenden Abstände in Anregungsrichtung (Z) mit den Fokuspunkten (F20, F21, F22) entsprechenden Intensitäten auszuleuchten.

9. Verfahren zur Zweiphotonenmikroskopie zur Gewinnung von Informationen aus einer biologischem Gewebeprobe (GP), umfassend die Schritte:
- Erzeugen eines Anregungsstrahls (AS) durch einer Lasereinheit (LE),
- Anordnen einer zwischen der Lasereinheit (LE) und der Gewebeprobe (GP) angeordneten Optikeinheit (31, 32 - 39) mit einem Objektivelement (OE), das einen Strahlengang (SG) der Optikeinheit (31, 32 - 39) zur Anregung der Gewebeprobe (GP) in einer Anregungsrichtung (Z) des Anregungsstrahls (AS) zur Gewebeprobe (GP) hin als letztes optisches Element abschließt und den Anregungsstrahl (AS) zur Erzeugung eines optischen Signals an unterschiedlichen Orten in oder an der Gewebeprobe in einer Ebene (X, Y) senkrecht zu der Anregungsrichtung (Z) fokussiert, und
- Erfassen des von dem Objektivelement (OE) aufgenommenen optischen Signals von der Gewebeprobe (GP) durch eine Detektoreinheit (DE),
wobei ein von der Optikeinheit (31, 32 - 39) umfasstes multifokales diffraktives optisches Element (DOE) in den Strahlengang (SG) der Optikeinheit (31, 32 - 39) in der Anregungsrichtung (Z) des Anregungsstrahls (AS) zur Gewebeprobe (GP) hin als vorletztes optisches Element benachbart zu dem Objektivelement (OE) angeordnet und so ausgebildet wird, dass der Anregungsstrahl (AS) nach Durchlaufen des Objektivelements (OE) in Ausgangsstrahlen (20, 21, 22) unterteilt wird, die jeweils einen Fokuspunkt (F20, F21, F22) in der Anregungsrichtung (Z) auf und/oder beabstandet von einer optischen Achse (OA) des Strahlengangs (SG) der Optikeinheit (31, 32 - 39) bilden, wobei jeder Fokuspunkt (F20, F21, F22) der von den Ausgangsstrahlen (20, 21, 22) jeweils gebildeten Fokuspunkte (F20, F21, F22) durch Beugung einer vollständigen Wellenfront des Anregungsstrahls (AS) gebildet wird.

10. Verfahren nach Anspruch 9, bei dem
- das diffraktive optische Element (DOE) aus einer zu der optischen Achse (OA) zentralen Lage (ZL) heraus in eine erste Richtung (-X) in einer Ebene (X, Y) senkrecht zur Anregungsrichtung (Z) so verschoben wird, dass jeder der Fokuspunkte (F70, F71 - F73), der in Anregungsrichtung (Z) jeweils zu einem anderen der Fokuspunkte benachbart ist, einen positiven Abstand (d1, d2) zu dem anderen Fokuspunkt in eine gleiche Richtung senkrecht zu der Anregungsrichtung (Z) aufweist,
- ein erstes Bild der Gewebeprobe (GP) von der Detektoreinheit (DE) aufgenommen wird, bei dem das diffraktive optische Element (DOE) aus der zu der optischen Achse (OA) zentralen Lage (ZL) heraus in die erste Richtung (-X) in einer Ebene (X, Y) senkrecht zur Anregungsrichtung (Z) verschoben ist,
- das diffraktive optische Element (DOE) aus einer zu der optischen Achse (OA) zentralen Lage (ZL) heraus in eine zu der ersten Richtung (-X) entgegengesetzte zweite Richtung (X) in einer Ebene (X, Y) senkrecht zur Anregungsrichtung (Z) verschoben wird,
- ein zweites Bild der Gewebeprobe (GP) von der Detektoreinheit (DE) aufgenommen wird, bei dem das diffraktive optische Element (DOE) aus der zu der optischen Achse (OA) zentralen Lage (ZL) heraus in die zu der ersten Richtung (-X) entgegengesetzte zweite Richtung (X) in einer Ebene (X, Y) senkrecht zur Anregungsrichtung (Z) verschoben ist,
- die ersten und zweiten Bilder der Gewebeprobe (GP) zu einem anaglyphischen 3D-Bild überlagert werden, um eine Tiefe einzelner Objekte (P1, P2) der Gewebeprobe (GP) in der Gewebeprobe (GP) zu bestimmen oder zumindest abzuschätzen.
